# EUROPÄISCHE PATENTSCHRIFT

(11) **EP 1 736 393 B1**
(45) Veröffentlichungstag und Bekanntmachung des Hinweises auf die Patenterteilung: **16.01.2008**
(21) Anmeldenummer: 05105551.5
(22) Anmeldetag: 22.06.2005
(51) Int. Cl.: B62B 3/10

(54) **Tragbock, insbesondere für Langmaterial**
Supporting trestle for long materials
Chevalet pour matériaux longs

(43) Veröffentlichungstag der Anmeldung: 27.12.2006
(73) Patentinhaber: Ademaj, Hajdar, 4416 Belvaux (LU)
(72) Erfinder: Ademaj, Hajdar, 4416 Belvaux (LU)
(74) Vertreter: Weydert, Robert

(56) Entgegenhaltungen:
- EP-A- 0 018 495
- WO-A-98/47407
- DE-U1- 8 804 208
- DE-U1- 29 901 790
- DE-U1- 29 909 594
- DE-U1-5202004 020 13
- FR-A- 2 579 158
- FR-A- 2 790 726
- US-A- 3 370 725
- US-A- 6 079 703
- US-A1- 2004 076 501

## Beschreibung

Diese Erfindung bezieht sich auf einen Tragbock, insbesondere für Langmaterial, mit einem ersten Rahmenteil und einem zweiten Rahmenteil, der in Vertikalrichtung in Bezug auf den ersten Rahmenteil einstellbar ist, wobei der erste Rahmenteil als Tragbockständer ausgeführt ist und einen ersten aufwärtsragenden Pfosten aufweist und der zweite Rahmenteil als einstellbarer Materialträger dient, wobei an dem ersten Rahmenteil ein zweiter aufwärts ragender Pfosten in Abstand von dem ersten Pfosten angeordnet ist, und der zweite Rahmenteil ein Materialtragelement, einen ersten Führungsteil und einen zweiten Führungsteil aufweist, wobei der erste Führungsteil auf dem ersten Pfosten und der zweite Führungsteil auf dem zweiten Pfosten in Längsrichtung desselben verschiebbar aufgenommen ist, und wobei an jedem Pfosten eine Ratschenstange befestigt ist, die sich in Pfostenlängsrichtung erstreckt und an jedem Führungsteil eine durch Federkraft in Eingriff mit der Ratschenstange vorgespannte Sperrklinke schwenkbar gelagert ist, und eine Betätigungseinrichtung mit den Sperrklinken verbunden ist, um die Sperrklinken entgegen der Federvorspannung ausser Eingriff mit den Ratschenstangen zurückzuziehen,

Ein im Stand der Technik bekannter Tragbock besteht im Allgemeinen aus einem Dreifussständer mit einer aufwärts ragenden Hohlstange in welcher eine zweite Stange teleskopisch aufgenommen ist, die an ihrem oberen Ende ein Querstück mit einer drehbar gelagerten Rolle oder eine Gabel als Materialtragelement aufweist. Eine Schraube ist üblicherweise vorgesehen um die beiden Stangen in einer gewünschten Stellung aneinander zu befestigen. Die Höheneinstellung eines solchen bekannten Tragbockes ist schwierig, da zuerst die Schraube zu lösen ist, anschliessend der Tragbock auf die gewünschte Höhe eingestellt und daraufhin die Feststellschraube wieder befestigt werden muss. Ein Tragbock gemäss dem Oberbegriff des Patentanspruches 1 ist in DE 299 09 594 U1 beschrieben. Dieser Tragbock ist ein Gravierbock mit einem Gestell, das zwei vertikale Vierkantrohre aufweist, längs welchen ein Viereckrahmen mit Tragzinken für einen zu bearbeitenden Stein auf- und abbeweglich ist. Die Vertikalverstellung des Rahmens erfolgt hydraulisch über einen Hubzylinder. Zur Arretierung dienen Rastleisten und Sperrklinkeneinrichtungen.

Aufgabe der Erfindung ist es einen verbesserten Tragbock des oben erwähnten Type zu schaffen, der sich einfacher auf die gewünschte Höhe einstellen lässt.

Zur Lösung dieser Aufgabe der Erfindung ist der Tragbock der vorstehend beschriebenen Bauform dadurch gekennzeichnet, dass der zweite Führungsteil mit seinem oberen Ende an dem Materialtragelement befestigt ist, und der zweite Pfosten und der zweite Führungsteil teleskopisch ineinander greifen und zusammen eine längenveränderliche Strebe bilden, und die Betätigungseinrichtung eine den beiden Sperrklinken gemeinsame Betätigungseinrichtung ist, um beide Sperrklinken gleichzeitig miteinander zu entriegeln.

Es wäre denkbar den zweiten Pfosten und den zweiten Führungsteil parallel zu dem ersten Pfosten und dem ersten Führungsteil anzuordnen. Vorzugsweise sind aber der zweite Pfosten und der zweite Führungsteil in einem spitzen Winkel zur Vertikalen und zu dem ersten Pfosten und dem ersten Führungsteil geneigt in der Richtung, dass der zweite Pfosten mit dem zweiten Führungsteil sich nach oben von dem ersten Pfosten und dem ersten Führungsteil entfernt. Auf diese Weise wird auf einem unteren Teil des ersten Rahmenteiles zusätzlicher Platz für eine weitere Auflage für Langmaterial und gleichzeitig eine breite Auflagefläche am zweiten Rahmenteil geschaffen.

In dem bevorzugten Ausführungsbeispiel ist der erste Pfosten starr am ersten Rahmenteil befestigt und erstreckt sich vertikal und der zweite Pfosten ist um eine horizontale Achse schwenkbar am ersten Rahmenteil befestigt, und erstreckt sich schräg nach oben in einem spitzen Winkel von dem ersten Pfosten weg. Bei dem Ausführungsbeispiel ist dann der erste Führungsteil fest an dem zweiten Rahmenteil befestigt und erstreckt sich vertikal nach unten von dem Materialtragelement, um auf und längs dem ersten Pfosten in Vertikalrichtung verschiebbar zu sein, und der zweite Führungsteil ist um eine horizontale Achse schwenkbar an dem zweiten Rahmenteil befestigt, um sich von dem Materialtragelement schräg nach unten zu erstrecken zur Führung auf und längs dem zweiten Pfosten. Die Schwenkachse des zweiten Pfostens am ersten Rahmenteil befindet sich dementsprechend näher an dem ersten Pfosten als die Schwenkachse des zweiten Führungsteiles an dem zweiten Rahmenteil.

Eine gemeinsame Betätigungsvorrichtung ist vorzugsweise vorgesehen um beide Sperrklinken gleichzeitig miteinander zu entriegeln. Die gemeinsame Betätigungsvorrichtung besteht aus einem flexiblen Verbindungsglied, z.B. einem Kabel, das an beiden Sperrklinken befestigt ist, um die Sperrklinken entgegen der Vorspannkraft der Vorspannfedern in Freigabestellung ausser Eingriff mit den Ratschenstangen zurückzuziehen.

Die Vorspannfedern sind vorzugsweise Blattfedern. Andere Federmittel können auch vorgesehen sein.

Auf einem oberen Tragelement des zweiten Rahmenteiles ist vorzugsweise eine Tragrolle für Langmaterial drehbar gelagert. Vorzugsweise sitzt die Tragrolle in einem Kasten, der eine offene Längsseite aufweist und der in verschiedenen Stellungen in eine Fassung in dem Tragelement einsetzbar ist, damit die offene Seite des Kastens, aus welcher die drehbare Rolle teilweise vorsteht, entweder nach oben, seitlich oder nach unten weisend, in die Fassung eingelegt werden kann.

Anstelle der Tragrolle kann auch z.B. eine Traggabel vorgesehen sein, die um eine vertikale Achse drehbar sein kann.

Weitere Merkmale der Erfindung sind in Unteransprüchen gekennzeichnet.

Ein Ausführungsbeispiel ist in den Zeichnungen dargestellt und wird nun ausführlicher beschrieben, es zeigen:
Figur 1 eine Seitenansicht des Tragbockes;
Figur 2 eine Draufsicht des Tragbockes;
Figur 3 eine Endansicht des Tragbockes;
Figur 4 eine Schnittansicht längs der Linie 4-4 nach Figur 1.

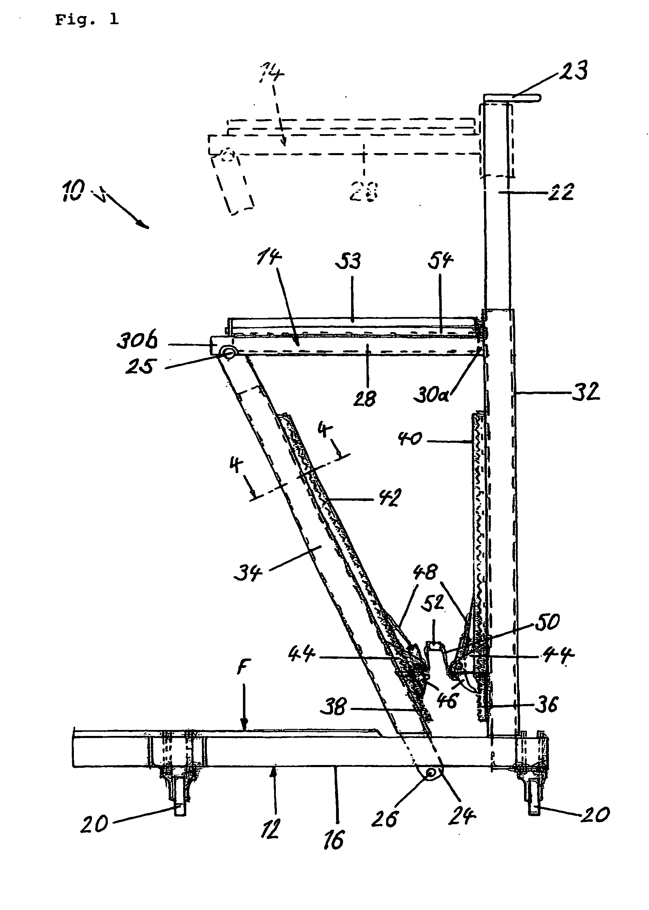

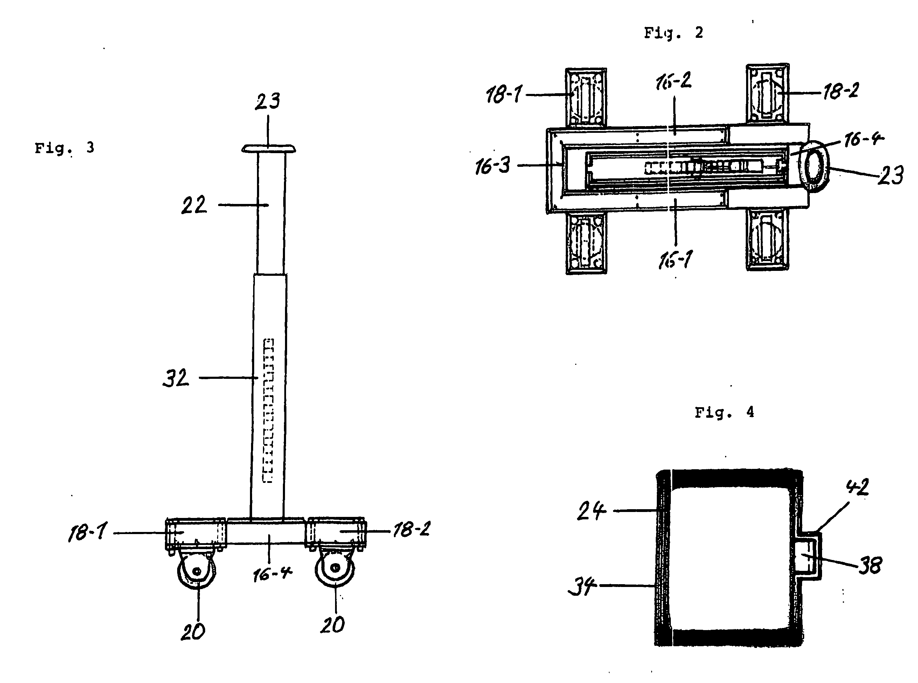

Der erfindungsgemässe Tragbock 10 wird nun ausführlicher beschrieben mit Bezug auf die Figuren 1-4. Der Tragbock 10 besteht aus zwei Rahmenteilen 12 und 14, d.h. dem fahrbaren unteren Rahmenteil 12 und dem verstellbaren Rahmenteil 14, der als höhenverstellbarer Materialträger dient und auf dem unteren Rahmenteil 12 in Vertikalrichtung einstellbar montiert ist.

Der untere Rahmenteil 12 hat einen horizontalen Basisrahmen 16 mit zwei horizontalen, parallelen Längsträgern 16-1 und 16-2, die an ihren beiden Enden über Querstücke 16-3 und 16-4 miteinander verbunden sind. Quer zu der Längsrichtung der Längsträger 16-1 und 16-2 sind in der Nähe der Enden der Längsträger seitliche Tragstücke 18-1 und 18-2 für Laufräder 20 befestigt. An dem Basisrahmen 16 ist ein erster, senkrechter Pfosten 22 starr befestigt, der vom Basisrahmen 16 nach oben ragt. Der Pfosten 22 hat an seinem oberen Ende einen Griff 23 mittels welchem der Tragbock 10 auf einer Bodenfläche bewegt werden kann. Mindestens eines der Laufräder 20 (vorzugsweise ein vorderes und ein hinteres) ist feststellbar, um den Tragbock gegen unerwünschtes Weiterrollen auf der Bodenfläche festzustellen.

Ein weiterer Pfosten 24 ist an seinem unteren Ende bei 26 schwenkbar an dem Basisrahmen 16 befestigt und erstreckt sich schräg nach oben von dem ersten Pfosten 22 weg unter Bildung eines spitzen Winkels von z.B. etwa 15 Grad zwischen den Längsachsen der beiden Pfosten 22 und 24.

Der verstellbare Rahmenteil 14 besteht aus einem oberen, im Wesentlichen horizontalen Materialtragelement oder einem Querstück 28, das an einem Ende 30a starr an einem ersten, vertikalen langgestreckten Führungsteil 32 befestigt ist, das auf dem ersten Pfosten 22 teleskopisch auf- und abbeweglich ist. Der Rahmenteil 14 hat einen zweiten, langgestreckten Führungsteil 34, der teleskopisch auf dem zweiten Pfosten 24 auf- und abbeweglich und an seinem oberen Ende schwenkbar (bei 25) am anderen Ende 30b des Tragelementes 28 angelenkt ist.

Der zweite Rahmenteil 14 ist auf dem ersten Rahmenteil 12 in Vertikalrichtung verstellbar, um das Materialtragelement 28 in verschiedenen Höhenlagen einzustellen. In der Figur 1 ist mit festen, ausgezogenen Linien die untere Stellung des zweiten Rahmenteiles 14 dargestellt, wobei die unteren Enden der Führungsteile 32, 34 sich in der Nähe des Basisrahmens 16 befinden. Die Figur 1 zeigt strichpunktiert einen Teil des zweiten Rahmenteiles 14 in der oberen Stellung. In dieser Stellung ist der spitze Winkel zwischen der gemeinsamen Längsachse des ersten Pfostens 22 und des ersten Führungsteiles 32 und der gemeinsamen Längsachse des zweiten Pfostens 24 und dem zweiten Führungsteil 34 etwas kleiner als in der unteren, mit durchgezogenen Linien gezeigten Stellung. Durch die Schräglage des zweiten Pfostens 24 und des zweiten Führungsteiles 34 wird an dem Basisrahmen 16 ein grösserer Platz geschaffen für eine weitere horizontale Auflagefläche F für Langmaterial ohne die Längsabmessung des unteren Rahmenteiles 16 unerwünscht verlängern oder die Länge des Tragelementes 28 verkürzen zu müssen.

Die beiden Pfosten 22 und 24 sowie auch die Führungsteile 32 und 34 bestehen aus Hohlkastenprofilstücken vorzugsweise mit quadratischem oder rechteckigem Querschnitt. Andere Querschnittsformen können auch vorgesehen werden. Auch der Basisrahmen 16 ist vorzugsweise aus Hohlkastenprofilstücken zusammengesetzt.

Auf den einanderzugewandten Seiten der Pfosten 22 und 24 sind Ratschenstangen 36, 38 befestigt, die sich in Längsrichtung der Pfosten erstrecken. Die Zähne der Ratschenstangen 36 und 38 sind in Figur 1 nur schematisch dargestellt, in Wirklichkeit sind die Zähne schräg nach oben geneigt. Schutzverkleidungen oder -hüllen 40 und 42 sind an den Hohlkastenprofilen der Führungsteile 32 und 34 befestigt und erstrecken sich in Längsrichtung der Führungsteile 32 und 34. Die Ratschenstangen 36 und 38 sich wenigstens zum Teil im Innern dieser Schutzverkleidungen 40, 42 aufgenommen.

In der Nähe des unteren Endes des Schutzverkleidungen 40, 42 jedes Führungsteiles 32 und 34 ist über Konsolen 44 je eine Sperrklinke 46 drehbar gelagert. Jede Sperrklinke 46 ist über eine Blattfeder 48 in Eingriff mit den Ratschenstangen 36 und 38 vorgespannt, um die freien unteren Enden der Sperrklinken 46 normalerweise in Eingriff mit den Ratschenstangen 36 und 38 unterhalb der Schutzverkleidungen 40, 42 zu halten. Die Blattfedern 48 sind einerseits an der zugehörigen Schutzverkleidung und andererseits an der zugehörigen Sperrklinke 46 befestigt. Anstelle der Blattfedern 48 können z.B. auch Torsionsfedern vorgesehen sein, die auf den Schwenkachsen der Sperrklinken 46 sitzen und sich mit einem Ende an dem zugehörigen Führungsteil und mit dem anderen Ende an der zugehörigen Sperrklinke 46 abstützen.

Eine Betägigungsvorrichtung ist vorgesehen um die Sperrklinken 46 entgegen der Federvorspannung durch die Blattfedern 48 ausser Eingriff mit den Ratschenstangen 36 und 38 zu bringen. Diese Betätigungseinrichtung besteht aus einem flexiblen Verbindungsglied oder Kabel 50 an dem ein Handgriff 52 befestigt ist. Das flexible Verbindungsglied 50 ist an die beiden Sperrklinken 46 angeschlossen. An dem oberen Querstück oder dem Tragelement 28 des zweiten Rahmenteiles 14 ist ein Handgriff (nicht dargestellt) befestigt mittels welchem der zweite Rahmenteil 14 manuell anzuheben ist um ihn auf dem ersten Rahmenteil 12 nach oben zu verstellen. Beim Nachobenziehen des zweiten Rahmenteiles 14 springen die Sperrklinken 46 über die nach oben geneigten Zähne der Ratschenstangen 36 und 38. Durch Zusammenwirken der federvorgespannten Sperrklinken 46 mit den Ratschenstangen 36 und 38 wird der zweite Rahmenteil 14 in der angehobenen Stellung zurückhalten sobald der Handgriff (nicht dargestellt) des zweiten Rahmenteiles 14 losgelassen wird. Wenn der zweite Rahmenteil 14 wieder nach unten verstellt werden soll, wird der Handgriff 52 nach oben gezogen, dadurch werden über das flexible Verbindungsglied 50 die beiden Sperrklinken 46 ausser Eingriff mit den Ratschenstangen 36, 38 entgegen ihrer Federvorspannung bewegt, und unter ihrem Eigengewicht gleitet der zweite Rahmenteil 14 wieder nach unten (manuell geführt und begleitet durch Inderhandhalten des Handgriffes 52). Zur Höheneinstellung des Tragbockes 10 ist somit keine Sperrschraube zu lösen und wieder festzuziehen, wie bei dem Stand der Technik.

Auf dem oberen Querstück oder dem Tragelement 28 des oberen Rahmenteiles 14 ist vorzugsweise eine Rolle 52 drehbar gelagert, die als Materialauflager dient. Vorzugsweise ist die Rolle 52 in einem von dem oberen Querstück 28 separaten, langgestreckten Kasten 54 gelagert und steht zum Teil auf der oberen Seite des langgestreckten Kastens 54 nach oben vor. Der Kasten 54 kann in verschiedenen Stellungen in eine Fassung 56 des Querstückes 28 eingesetzt werden, so dass der Kasten 54 für die Rolle 52 mit der offenen oberen Seite, aus der die Rolle 52 vorsteht, nach oben, seitlich oder auch nach unten weist, um anstatt der Rolle 52 eine nicht drehbare Tragfläche für das Langmaterial bereitzustellen.

## Patentansprüche

1. Tragbock, insbesondere für Langmaterial, mit einem ersten Rahmenteil (12) und einem zweiten Rahmenteil (14), der in vertikalrichtung in Bezug auf den ersten Rahmenteil (12) einstellbar ist, wobei der erste Rahmenteil (12) als Tragbockständer ausgeführt ist und einen ersten aufwärtsragenden Pfosten (22) aufweist und der zweite Rahmenteil (14) als einstellbarer Materialträger dient, wobei an dem ersten Rahmenteil (12) ein zweiter aufwärts ragender Pfosten(24) in Abstand von dem ersten Pfosten (22) angeordnet ist, und der zweite Rahmenteil (14) ein Materialtragelement (28), einen ersten Führungsteil (32) und einen zweiten Führungsteil (34) aufweist, wobei der erste Führungsteil (32) auf dem ersten Pfosten (24) und der zweite Führungsteil auf dem zweiten Pfosten in Längsrichtung desselben verschiebbar aufgenommen ist, wobei an jedem Pfosten (22, 24) eine Ratschenstange (36, 38) befestigt ist, die sich in Pfostenlängsrichtung erstreckt und an jedem Führungsteil (32, 34) eine durch Federkraft in Eingriff mit der Ratschenstange (36, 38) vorgespannte Sperrklinke (46) schwenkbar gelagert ist, und wobei eine Betätigungseinrichtung (50, 52) mit den Sperrklinken (46) verbunden ist, um die Sperrklinken (46) entgegen der Federvorspannung ausser Eingriff mit den Ratschenstangen (36, 38) zurückzuziehen, **dadurch gekennzeichnet, dass** der zweite Führungsteil (34) mit seinem oberen Ende an dem Materialtragelement befestigt ist, und der zweite Pfosten (24) und der zweite Führungsteil (34) teleskopisch ineinander greifen und zusammen eine längenveränderliche Strebe bilden, und die Betätigungseinrichtung (50, 52) eine den beiden Sperrklinken (46) gemeinsame Betätigungseinrichtung ist, um beide Sperrklinken (46) gleichzeitig miteinander zu entriegeln.

2. Tragbock nach Anspruch 1, **dadurch gekennzeichnet, dass** der erste Pfosten (22) starr am ersten Rahmenteil (12) und der erste Führungsteil (32) starr am zweiten Rahmenteil (14) befestigt ist.

3. Tragbock nach einem der Ansprüche 1 oder 2, **dadurch gekennzeichnet, dass** der erste Pfosten (22) und der erste Führungsteil (32) vertikal angeordnet sind.

4. Tragbock nach einem der Ansprüche 1 bis 3, **dadurch gekennzeichnet, dass** der zweite Pfosten (24) und der zweite Führungsteil (34) eine gemeinsame Längsachse aufweisen, die in einem spitzen Winkel in Bezug auf eine gemeinsame Längsachse des ersten Pfostens (22) und des ersten Führungsteiles (32) angeordnet ist, und dass der zweite Pfosten (24) um eine horizontale Achse schwenkbar am ersten Rahmenteil (12) befestigt ist, und der zweite Führungsteil (34) um eine horizontale Achse schwenkbar am zweiten Rahmenteil (14) befestigt ist.

5. Tragbock nach Anspruch 4, **dadurch gekennzeichnet, dass** die Schwenkachse des zweiten Pfostens (24) sich in einem kleineren Abstand von der gemeinsamen Längsachse des ersten Pfostens (22) und des ersten Führungsteiles (32) befindet als die Schwenkachse des zweiten Führungsteiles (34), damit der zweite Pfosten (24) und der zweite Führungsteil (34) nach oben von dem ersten Pfosten (22) und dem ersten Führungsteil (32) weggeneigt sind.

6. Tragbock nach einem der Ansprüche 1 bis 5, **dadurch gekennzeichnet, dass** langgestreckte Schutzverkleidungen (40, 42) für die Ratschenstangen (36, 38) an den Führungsteilen (32, 34) vorgesehen sind.

7. Tragbock nach einem der Ansprüche 1 bis 6, **dadurch gekennzeichnet, dass** die Betätigungseinrichtung ein flexibles Verbindungsglied (50) aufweist, das an beiden Sperrklinken (46) befestigt ist und mit einem Handgriff (25) versehen ist.

8. Tragbock nach einem der Ansprüche 1 bis 7, **dadurch gekennzeichnet, dass** an dem ersten Pfosten (22) oberhalb des ersten Führungsteiles (32) ein Handgriff (23) zum Transport des Tragbockes befestigt ist.

9. Tragbock nach einem der Ansprüche 1 bis 8, **dadurch gekennzeichnet, dass** an dem ersten Rahmenteil (12) Laufräder (20) vorgesehen sind, wobei mindestens ein Laufrad feststellbar ist.

10. Tragbock einem der Ansprüche 1 bis 9, **dadurch gekennzeichnet, dass** an dem zweiten Rahmenteil (14) ein Handgriff befestigt ist, mittels welchem der zweite Rahmenteil (14) nach oben verstellbar ist.

11. Tragbock einem der Ansprüche 1 bis 10, **dadurch gekennzeichnet, dass** an dem Materialtragelement (28) eine drehbar gelagerte Tragrolle (53) vorgesehen ist.

12. Tragbock nach Anspruch 11, **dadurch gekennzeichnet, dass** die Tragrolle (53) in einem an einer Längsseite offenen Kasten (54) so gelagert ist, damit die Rolle (53) zum Teil aus dem Kasten (54) vorsteht, und dass der Kasten (54) in verschiedenen Stellungen in eine an dem Materialtragelement (28) vorgesehene Fassung (56) so einsetzbar ist, damit der Kasten (54) mit der offenen Seite entweder nach oben, seitlich, oder nach unten gerichtet ist.

## Claims

1. Supporting trestle, especially for long materials, comprising a first frame part (12) and a second frame part (14), which is adjustable in vertical direction with respect to the first frame part (12), wherein the first frame part (12) is designed as supporting trestle stand and comprises a first upwardly extending post (22) and the second frame part (14) serves as adjustable material support, wherein there is provided on the first frame part (12) a second upwardly extending post (24) spaced from the first post (22), and the second frame part (14) comprises a material support element (28), a first guide part (32) and a second guide part (34), wherein the first guide part (32) is received on the first post (24) and the second guide part is received on the second post for slidable movement in longitudinal direction thereof, wherein a ratchet bar (36, 38) is fixed to each post (22, 24) and extends in longitudinally direction of the post and there is pivotably mounted on each guide part (32, 34) a locking pawl preloaded by spring force to engage the ratchet bar (36, 38), and wherein an actuating device (50, 52) is connected to the locking pawls (46) to retract the locking pawls (46) against the spring force from engagement with the ratchet bars (36, 38), **characterized in that** the second guide part (34) is connected at its upper end to the material support element, and the second post (24) and the second guide part (34) are telescopically engaged one within the other and form together a variable length strut, and the actuating device (50, 52) is an actuating device common to both locking pawls to simultaneously unlock both said locking pawls (46).

2. Supporting trestle according to claim 1,
**characterized in that** the first post (22) is rigidly fixed to the first frame part (12) and the first guide part (32) is rigidly fixed to the second frame part (14).

3. Supporting trestle according to claim 1 or 2, **characterized in that** the first post (22) and the first guide part (32) are vertically arranged.

4. Supporting trestle according to one of the claims 1 to 3, **characterized in that** the second post (24) and the second guide part (34) have a common longitudinal axis, arranged at an acute angle with respect to a common longitudinal axis of the first post (22) and the first guide part (32), and that the second post (24) is attached to the first frame part (12) for pivot motion about a horizontal axis, and the second guide part (34) is attached to the second frame part (14) for pivot motion about a horizontal axis.

5. Supporting trestle according to claim 4,
**characterized in that** the pivot axis of the second post (24) is at a smaller distance from the common longitudinal axis of the first post (22) and the first guide part (32) than the pivot axis of the second guide part (34), so that the second post (24) and the second guide part (34) are inclined away from the first post (22) and the first guide part (32) in an upward direction.

6. Supporting trestle according to one of claims 1 to 5, **characterized in that** elongated protection shieldings (40, 42) for the ratchet bars (36, 38) are provided on the guide parts (32, 34).

7. Supporting trestle according to one of claims 1 to 6, **characterized in that** the actuating device has a flexible connecting element (50) fixed to both locking pawls (46) and provided with a hand grip (25).

8. Supporting trestle according to one of claims 1 to 7, **characterized in that** a hand grip (23) for transporting the supporting trestle is provided on the first post (22) above the first guide part (32).

9. Supporting trestle according to one of claims 1 to 8, **characterized by** castors (20) provided on the first frame part (12), at least one of said castors being arrestable.

10. Supporting trestle according to one of claims 1 to 9, **characterized in that** there is provided a hand grip on the second frame part (14) by means of which the second frame part (14) is upwardly adjustable.

11. Supporting trestle according to one of claims 1 to 10, **characterized in that** there is provided a rotatably mounted support roller (53) on the material support element (28).

12. Supporting trestle according to claim 11, **characterized in that** the support roller (53) is mounted in a cage (54) which is open at one longitudinal side so that the roller (53) projects partly from the cage (54), and that a cage (54) is insertable in different positions into a holder (56) provided on the material supporting element (28) so that the cage (54) faces with the open side thereof either upwardly, laterally, or downwardly.

## Revendications

1. Chevalet, en particulier pour matériaux longs, comportant une première partie de cadre (12) et une seconde partie de cadre (14), qui est ajustable en direction verticale par rapport à la première partie de cadre (12), ladite première partie de cadre (12) étant conçue en tant que support de chevalet et étant pourvue d'un premier montant debout (22) et la seconde partie de cadre (14) servant comme support de matériaux ajustable, ladite première partie de cadre (12) étant pourvue d'un second montant (24) s'étendant vers le haut et situé à distance du premier montant (22), et la seconde partie de cadre (14) comportant un élément de support de matériaux (28), une première partie de guidage (32) et une seconde partie de guidage (34), ladite première partie de guidage (32) étant reçue de façon mobile en direction longitudinale sur le premier montant (24) et ladite seconde partie de guidage étant reçue de façon mobile en direction longitudinale sur le second montant, une barre à rochets (36, 38) étant fixée à chaque montant (22, 24) et s'étendant en direction longitudinale du montant, un cliquet de blocage (46) préchargé par force de ressort en engagement avec la barre à rochets (36, 38) étant monté à pivotement sur chaque partie de guidage (32, 34), et un dispositif d'actionnement (50, 52) étant lié aux cliquets de blocage en vue de les dégager des barres à rochets (36, 38) contre la force de précharge, **caractérisé en ce que** la seconde partie de guidage (34) est fixée à son extrémité supérieure à l'élément de support de matériau, et le second montant (24) et la seconde partie de guidage (34) sont engagés de façon télescopique l'un dans l'autre et forment ensemble une entretoise à longueur variable, et le dispositif d'actionnement (50, 52) est un dispositif d'actionnement commun des deux cliquets de blocage (46) en vue de débloquer les deux cliquets (46) simultanément.

2. Chevalet selon la revendication 1, **caractérisé en ce que** le premier montant (22) est attaché rigidement à la première partie de cadre (12) et la première partie de guidage (32) est attachée rigidement à la seconde partie de cadre (14).

3. Chevalet selon la revendication 1 ou 2, **caractérisé en ce que** le premier montant (22) et la seconde partie de guidage (32) sont disposées verticalement.

4. Chevalet selon l'une des revendications 1 à 3, **caractérisé en ce que** le second montant (24) et la seconde partie de guidage (34) ont un axe longitudinal commun formant un angle aigu par rapport à un axe longitudinal commun du premier montant (22) et de la première partie de guidage (32), et **en ce que** le seconde montant (24) est attachée à la première partie de cadre (12) en vue de pivoter autour d'un axe horizontal, et la seconde partie de guidage (34) est attachée à la seconde partie de cadre (14) en vue de pivoter autour d'un axe horizontal.

5. Chevalet selon la revendication 4, **caractérisé en ce que** l'axe de pivot du second montant (24) se trouve en une plus petite distance de l'axe longitudinal commun du premier montant (22) et de la première partie de guidage (32) que l'axe de pivot de la seconde partie de guidage (34), de sorte que le second montant (24) et la seconde partie de guidage (34) soient inclinés en vue de s'éloigner vers le haut du premier montant (22) et de la seconde partie de guidage (32).

6. Chevalet selon l'une des revendications 1 à 5, **caractérisé en ce que** des coffrages de protection allongés (40, 42) pour les barres à rochets (36, 38) sont prévus sur les parties de guidage (32, 34).

7. Chevalet selon l'une des revendications 1 à 6, **caractérisé en ce que** le dispositif d'actionnement est pourvu d'un élément de liaison flexible (50) fixé aux deux cliquets de blocage (46) et pourvu d'une poignée (25).

8. Chevalet selon l'une des revendications 1 à 7, **caractérisé en ce qu'**une poignée (23) pour le transport du chevalet est fixée au premier montant (22) au-dessus de la première partie de guidage (32).

9. Chevalet selon l'une des revendications 1 à 8, **caractérisé en ce que** la première partie de cadre (12) est pourvue de roulettes (22), dont au moins une peut être bloquée.

10. Chevalet selon l'une des revendications 1 à 9, **caractérisé en ce qu'**une poignée est fixée à la seconde partie de cadre (14), au moyen de laquelle la seconde partie de cadre (14) peut être déplacée vers le haut.

11. Chevalet selon l'une des revendications 1 à 10, **caractérisé en ce qu'**un rouleau de support (53) monté à rotation est prévu sur l'élément de support de matériaux (28).

12. Chevalet selon la revendication 11, **caractérisé en ce que** le rouleau de support (53) est monté dans une cage (54) ouverte sur un côté longitudinal de sorte que le rouleau (53) s'étende en partie hors de cette cage (54), et **en ce que** la cage (54) peut être placée en différentes positions dans une monture (56) prévue sur l'élément de support de matériaux (28) de sorte que cette cage (54) soit orientée avec son côté ouvert vers le haut, latéralement, ou vers le bas.
